# EUROPÄISCHE PATENTSCHRIFT

(11) **EP 1 116 309 B1**
(45) Veröffentlichungstag und Bekanntmachung des Hinweises auf die Patenterteilung: **20.08.2008**
(21) Anmeldenummer: 99955802.6
(22) Anmeldetag: 22.09.1999
(51) Int. Cl.: H02B 13/025

(54) **MITTELSPANNUNGS-SCHALTANLAGEN MIT ABLEITKANÄLEN ZUR ABFÜHRUNG VON LICHTBOGENZERSETZUNGSPRODUKTEN**
MEDIUM-VOLTAGE SWITCHGEAR WITH DISCHARGE CHANNELS FOR EVACUATING ARC DECOMPOSITION PRODUCTS
DISPOSITIFS DE COMMUTATION MOYENNE TENSION A CANAUX DEFLECTEURS POUR L'EVACUATION DE PRODUITS DE DECOMPOSITION PAR L'ARC ELECTRIQUE

(30) Priorität: 22.09.1998 DE 19845775
(43) Veröffentlichungstag der Anmeldung: 18.07.2001
(73) Patentinhaber: SIEMENS AKTIENGESELLSCHAFT, 80333 München (DE)
(72) Erfinder: ALGERMISSEN, Wilfried, D-91301 Forchheim (DE); BETZMANN, Martin, D-61273 Wehrheim (DE); SPÄCK, Helmut, D-63739 Aschaffenburg (DE); SOLBERG, Carl-O., N-0673 Oslo (NO)
(86) Internationale Anmeldenummer: PCT/DE1999/003084
(87) Internationale Veröffentlichungsnummer: WO 2000/017974

(56) Entgegenhaltungen:
- EP-A- 0 437 151
- DE-A- 3 424 363

## Beschreibung

Die Erfindung betrifft Mittelspannungs-Schaltanlagen mit einem oder mehreren Schotträumen, beispielsweise mit Behälterräumen zur Aufnahme von Schaltgeräten und Kabelanschlußräumen zur Aufnahme von Kabelanschlüssen, und mit Ableitkanälen, über die im Störlichtbogenfall heiße Lichtbogenzersetzungsprodukte zur Kühlung und Druckminderung durch definierte Ausblasöffnungen nach außen geführt sind, wobei die Ausblasöffnungen jeweils durch eine Filtereinrichtung gasdurchlässig verschlossen sind.

Mittelspannungs-Schaltanlagen der eingangs definierten Art sind aus der DE 34 24 363 A1 bekannt. Die schädlichen Auswirkungen von Störlichtbögen in Schaltanlagen werden hier durch rasches Aufheizen fester Filtermaterialien gemindert. Als Filtermaterial sind beispielsweise gepreßte Stahlspäne vorgesehen, die in druckfesten, mit Ein- und Ausströmöffnungen versehenen Metallbehältern untergebracht sind. Die durch die Filtermaterialien abgekühlten Gase werden dann über luftgekühlte Behälter aus dem näheren Bereich der Schaltanlagen abgeführt.

Im Zusammenhang mit dem Abführen der Gase ist es aus der DE 196 547 A1 außerdem bekannt, je nach Anordnung der Mittelspannungs-Schaltanlagen in offenen oder geschlossenen Räumen die Ableitkanäle zur gerichteten Ableitung der heizen Gase im Störlichtbogenfall im Bereich der eigentlichen Schaltzellen anzuordnen. Innerhalb der Ableitkanäle sind entgegen der Strömungsrichtung der heißen Gase zickzackförmig gebogene, mit Löchern versehene Bleche angeordnet, um auf die Gase druckentlastend mit entsprechender Abkühlung einwirken zu können. Die Ableitkanäle sind darüber hinaus im Bereich ihrer Ausblasöffnungen mit sogenannten Verschlußorganen gegen hineinfallende Gegenstände, beispielsweise durch dünne Bleche, Folien oder sich öffnende Klappen, gesichert.

Aus der DE 296 21 287 U sind darüber hinaus Ableitkanäle bekannt, die durch gleich geformte, versetzt zueinander angeordnete Lochbleche innerhalb der Ableitkanäle gebildet sind. Die austretenden Gase werden durch diese Lochbleche derart verwirbelt, daß größere Partikel in den Ableitkanälen zurückgehalten werden und somit nicht ins Freie gelangen.

Die der Erfindung zugrundeliegende Aufgabe besteht darin, die negativen Auswirkungen der im Störlichtbogenfall austretenden Lichtbogenzersetzungsprodukte zu minimieren.
Erfindungsgemäß wird dies durch die Merkmale
1.1 die Filtereinrichtungen sind in Filtergehäusen angeordnet und mit mindestens zwei zur Durchströmrichtung annähernd rechtwinklig angeordneten, gasdurchlässigen Stützelementen versehen,
1.2 zwischen den einzelnen Stützelementen sind jeweils gasdurchlässige Filtermatten angeordnet,
erreicht.

Mit dem Einsatz derartiger Filtersysteme im Bereich der Ausblasöffnungen der Mittelspannungs-Schaltanlagen ist der Rückhalt der sich aus den Lichtbogenzersetzungen im Störlichtbogenfall bildenden Partikel weitestgehend sichergestellt. Bei den Lichtbogenzersetzungsprodukten handelt es sich im wesentlichen um Metallstäube und -oxyde, Metallfluoride und Produkten aus der Pyrolyse von Kunststoffteilen, die bei ihrer Freisetzung bisher je nach Anlagentyp, Störlichtbogenfehlerort und der umgesetzten Energien mehr oder weniger umfangreiche Reinigungsarbeiten erfordern.
Mit den bisher bekannten Ableitkanälen zur Druckentlastung ist ein Rückhalt der festen Partikel auch mit dem Einsatz spezieller Druckminderer und Kühlelemente durch versetzt angeordnete Lochbleche nur im eingeschränkten Umfang möglich. Das Vorsehen von aktiv wirkenden Kurzschließ- und Erdungsvorrichtungen oder auch Schnellabschaltungen zur Begrenzung des Energieumsatzes sind ebenfalls nur eingeschränkt wirksam. Darüber hinaus sind besonders aufwendige Maßnahmen zu treffen, um mit diesen aktiven Schutzsystemen entsprechend den hohen Sicherheitsanforderungen in dieser Technik praktisch lebenslange Funktionsfähigkeit zu gewährleisten.
Mit den erfindungsgemäß passiv wirkenden Filtereinrichtungen, bei den zwischen den einzelnen gasdurchlässigen Stützelementen noch zusätzlich gasdurchlässige Filtermatten vorgesehen sind, werden auch die kleinsten festen Partikel am Austreten aus den Ableitkanälen gehindert.
Als besonders vorteilhaft für die Erfindung ist in diesem Zusammenhang anzusehen, daß dieses Filtersystem wartungsfrei und klimaunabhängig ist und über lange Zeit störungsfrei funktionsfähig ist. Dieses Filtersystem kann darüber hinaus universell an beliebigen Stellen innerhalb der Mittelspannungs-Schaltanlagen eingesetzt sein, um bei allen denkbaren Fehlern innerhalb der Mittelspannungs-Schaltanlagen seine vorteilhafte Wirkung entfalten zu können.

Gemäß einer vorteilhaften Ausgestaltung der Erfindung ist das Merkmal
2.1 die Filtereinrichtungen sind nach außen jeweils durch ein aus Lochblech gebildetes Stützelement begrenzt,
vorgesehen.

Durch die aus den Lochblechen gebildeten Stützelementen sind die Filtereinrichtungen als kompaktes Bauelement realisiert. Mit derartigen Filtereinrichtungen im Bereich der Ausblasöffnungen sind darüber hinaus die Strömungsverhältnisse optimal an die Bedürfnisse der jeweiligen Mittelspannungs-Schaltanlagen anzupassen.

Gemäß einer weiteren vorteilhaften Ausgestaltung der Erfindung sind die Merkmale
3.1 die Filtermatten sind aus alterungsbeständigen Fasermaterial gebildet,
3.2 das Fasermaterial besteht aus Glas- und/oder Synthesefasern,
vorgesehen.
Mit diesen handelsüblichen Filtermatten lassen sich in sehr vorteilhafter Weise die passiv wirkende Filtersysteme auch für die Mittelspannungs-Schaltanlagen herstellen. Die kostengünstigen Filtereinrichtungen können im Bedarfsfall ohne großen Aufwand erneuert werden.

Gemäß einer weiteren vorteilhaften Ausgestaltung der Erfindung ist das Merkmal
4.1 die Filtermatten sind mit einem chemischen Stoff zur Neutralisation von Lichtbogenzersetzungsprodukten versehen
vorgesehen.
Mit dem chemischen Stoff, der beispielsweise durch Löschkalk realisiert sein kann, lassen sich die eingangs erwähnten Zersetzungsprodukte in ihrer Wirkung neutralisieren.

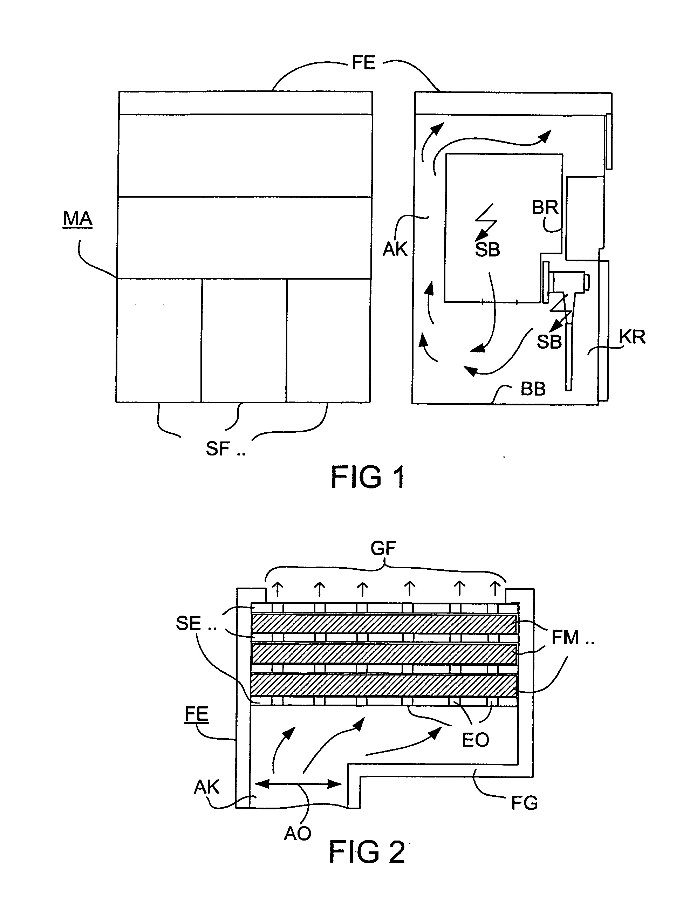

Die Erfindung wird durch ein in zwei Figuren dargestelltes Ausführungsbeispiel näher erläutert, wobei die Figur 1 den prinzipiellen Aufbau einer Mittelspannungs-Schaltanlage mit mehreren Schaltfeldern zeigt und die Figur 2 nähere Einzelheiten der erfindungsgemäßen Filtereinrichtung erkennen läßt. Die Figur 1 stellt eine aus drei Schaltfelder SF.. gebildete Mittelspannungsschaltanlage MA schematisch dar, die neben den Behälterraum BR den Kabelraum KR aufweist, der nach unten bekanntermaßen durch das Bodenblech BB verschlossen ist.
An die Kabelanschlußraum KR schließt sich im hinteren Bereich der Mittelspannungsschaltanlage MA der Ableitkanal AK an, durch den die im Störlichtbogenfall entstehenden Gase aus dem Inneren der Mittelspannungsschaltanlage MA nach außen geführt werden. Des weiteren ist ersichtlich, daß die Mittelspannungsschaltanlage MA mit dem Ableitkanal AK durch die Filtereinrichtung FE nach oben hin abgeschlossen ist.
Im Störlichtbogenfall, der hier beispielsweise im Behälterraum BR und im Kabelanschlußraum KR durch einen Zickzack-Pfeil SB angedeutet ist, erfolgt der Druckabbau im Kabelanschlußraum KR und im Ableitkanal AK, über den die heißen Gase aus dem inneren Bereich der Mittelspannungsschaltanlage MA in Pfeilrichtung heraus geführt werden,

Die Figur 2 läßt den grundsätzlichen Aufbau der erfindungsgemäßen Filtereinrichtung FE erkennen. Die Filtereinrichtung FE enthält in dem Filtergehäuse FG die Stützelemente SE.., die durch sogenannte Lochbleche realisiert sind. Zwischen den Stützelementen SE.. sind die Filtermatten FM.. positioniert, die im Zusammenwirken mit den Stützelemnten SE.. im Störlichtbogenfall das Austreten fester Partikel aus dem Ableitkanal AK verhindern. Mit den kleinen, gleichmäßig über die Oberfläche der Filtereinrichtung FE verteilten, Pfeilen ist angedeutet, daß der Gasstrom GF aus der Filtereinrichtung FE so austritt, daß keine festen Partikel der Lichtbogenzersetzungsprodukte aus dem Innenbereich der Mittelspannungsschaltanlage MA über den Ableitkanal AK ins freie Umfeld gelangen.

## Patentansprüche

1. Mittelspannungs-Schaltanlagen mit einem oder mehreren Schotträumen, beispielsweise mit Behälterräumen (BR) zur Aufnahme von Schaltgeräten und Kabelanschlußräumen (KR) zur Aufnahme von Kabelanschlüssen (KA), und mit Ableitkanälen (AK), über die im Störlichtbogenfall heiße Lichtbogenzersetzungsprodukte zur Kühlung und Druckminderung durch definierte Ausblasöffnungen (AO) nach außen geführt sind, wobei die Ausblasöffnungen (AO) jeweils durch eine Filtereinrichtung (FE) gasdurchlässig verschlossen sind,
**gekennzeichnet durch** die Merkmale
1.1 die Filtereinrichtungen (FE) sind in Filtergehäusen (FG) angeordnet und mit mindestens zwei zur Durchströmrichtung annähernd rechtwinklig angeordneten, gasdurchlässigen Stützelementen (SE..) versehen,
1.2 zwischen den einzelnen Stützelementen (SE..) sind jeweils gasdurchlässige Filtermatten (FM) angeordnet.

2. Mittelspannungs-Schaltanlagen nach Anspruch 1,
**gekennzeichnet durch** das Merkmal
2.1 die Filtereinrichtungen (FE) sind nach außen jeweils durch ein aus Lochblech gebildetes Stützelement (SE..) begrenzt.

3. Mittelspannungs-Schaltanlagen nach Anspruch 1,
**gekennzeichnet durch** die Merkmale
3.1 die Filtermatten (FM) sind aus alterungsbeständigen Fasermaterial gebildet,
3.2 das Fasermaterial besteht aus Glas- und/oder Synthesefasern.

4. Mittelspannungs-Schaltanlagen nach einem der vorangegangene Ansprüche 1 bis 3,
**gekennzeichnet durch** das Merkmal
4.1 die Filtermatten (FM) sind mit einem chemischen Stoff zur Neutralisation von Lichtbogenzersetzungsprodukten versehen.

## Claims

1. Medium-voltage switchgear assemblies having one or more compartment areas, for example with containing areas (BR) for holding switching devices and cable connection areas (KR) for holding cable connections (KA), and having discharge channels (AK) via which, in the event of a fault arc, hot arc decomposition products are carried outwards through defined blow-out openings (AO) for cooling and in order to reduce the pressure, with the blow-out openings (AO) each being closed by a filter device (FE) such that gas can pass through,
**characterized by** the following features:
1.1 the filter devices (FE) are arranged in filter housings (FG) and are provided with at least two gas-permeable supporting elements (SE..) which are arranged approximately at right angles to the flow direction, and
1.2 gas-permeable filter mats (FN) are arranged between each of the individual supporting elements (SE..).

2. Medium-voltage switchgear assemblies according to Claim 1,
**characterized by** the following feature:
2.1 the filter devices (FE) are each bounded on the outside by a supporting element (SE..) formed from perforated metal sheet.

3. Medium-voltage switchgear assemblies according to Claim 1,
**characterized by** the following features:
3.1 the filter mats (FN) are formed from ageing-resistant fibre material, and
3.2 the fibre material is composed of glass and/or synthetic fibres.

4. Medium-voltage switchgear assemblies according to one of the preceding Claims 1 to 3,
**characterized by** the following feature:
4.1 the filter mats (FN) are provided with a chemical substance for neutralization of arc decomposition products.

## Revendications

1. Dispositif de commutation moyenne tension ayant un ou plusieurs espaces cloisonnés, en ayant par exemple des espaces (BR) formant récipient pour le logement d'appareils de commutation et d'espaces (KR) de connexion de câble pour le logement de connexions (KA) de câble, et ayant des canaux (AK) de dérivation, par lesquels en cas d'arc électrique parasite des produits chauds de décomposition par l'arc électrique sont, pour les refroidir et en abaisser la pression, guidés vers l'extérieur par des ouvertures (AO) d'extinction définies, les ouvertures (AO) d'extinction étant fermées d'une manière perméable au gaz respectivement par un dispositif (FE) de filtration,
**caractérisé par** les dispositions
1.1 les dispositifs (FE) de filtration sont disposés dans des carters (FG) de filtre et sont munis d'au moins deux éléments (SE..) d'appui perméables au gaz et disposés à peu près à angle droit par rapport à la direction de passage,
1.2 des nappes (FM) filtrantes, perméables au gaz sont disposées respectivement entre les divers éléments (SE..) d'appui.

2. Dispositif de commutation moyenne tension suivant la revendication 1,
**caractérisé par** la disposition
2.1 les dispositifs (FE) de filtrations sont délimités vers l'extérieur respectivement par un élément (SE..) d'appui formé d'une tôle perforée.

3. Dispositif de commutation moyenne tension suivant la revendication 1,
**caractérisé par** les dispositions
3.1 les nappes (MF) filtrantes sont en un matériau fibreux résistant au vieillissement,
3.2 le matériau fibreux est en fibres de verre et/ou en fibres de synthèse.

4. Dispositif de commutation moyenne tension suivant l'une des revendications 1 à 3 précédentes,
**caractérisé par** la disposition
4.1 les nappes (FM) filtrantes sont munies d'une substance chimique de neutralisation des produits de décomposition par l'arc électrique.
